# EUROPÄISCHE PATENTSCHRIFT

(11) **EP 2 643 103 B1**
(45) Veröffentlichungstag und Bekanntmachung des Hinweises auf die Patenterteilung: **07.09.2016**
(21) Anmeldenummer: 11833591.8
(22) Anmeldetag: 24.11.2011
(51) Int. Cl.: B07C 5/342, B07C 5/34

(54) **VERFAHREN UND EINRICHTUNG ZUR EINZELKORNSORTIERUNG VON OBJEKTEN AUS SCHÜTTGÜTERN**
PROCESS AND DEVICE FOR SORTING SEPARATE GRAINS OF BULK MATERIAL
PROCÉDÉ ET DISPOSITIF DE TRI DES GRAINS SÉPARÉS DE MATIÈRE EN VRAC

(30) Priorität: 25.11.2010 DE 102010052338
(43) Veröffentlichungstag der Anmeldung: 02.10.2013
(73) Patentinhaber: Steinert Elektromagnetbau GmbH, 50933 Köln (DE)
(72) Erfinder: KILLMANN, Dirk, 50129 Bergheim (DE)
(74) Vertreter: Kassner, Klaus
(86) Internationale Anmeldenummer: PCT/DE2011/002027
(87) Internationale Veröffentlichungsnummer: WO 2012/089185

(56) Entgegenhaltungen:
- EP-A1- 0 550 944
- EP-A1- 1 830 176
- WO-A2-2012/001133

## Beschreibung

### Technisches Gebiet

Die Erfindung betrifft ein Verfahren und eine Einrichtung zur Einzelkornsortierung von Objekten aus Schüttgütern, insbesondere gebrochene mineralische Erze, zerkleinerte und unzerkleinerte Kunststoffe aus Abfällen, zerkleinertes Holz auf einer Fördereinrichtung mit einer das nach Sorten erkannte Schüttgut in Fraktionen trennenden, ansteuerbaren Austragseinheit.

### Stand der Technik

Derartige Verfahren und Sortiereinrichtungen sind in der Aufbereitungstechnik bekannt.

Schon gemäß EP 0 550 944 A wird eine Vorrichtung beschrieben, die dem Sortieren undurchsichtiger Fremdartikel zwischen durchsichtigen Körpern dient. Insbesondere handelt es sich hierbei um undurchsichtige Fremdartikel, wie Kieselsteine oder Keramikteile aus einer großen Anzahl transparenter Körper wie Glasteile von wiedergesammelten Glasbruchstücken.

Diese Vorrichtung umfasst bekannte Elemente, wie
▪ Bewegungseinrichtungen zum Bewegen einzelner Körper über eine Abtastlinie,
▪ Einrichtungen zum Abtasten der Objekte auf der Abtastlinie durch einen Lichtstrahl,
▪ optische Sensoreinrichtungen, aufweisend eine Vielzahl von FestkörperBildaufnahmeelementen zum Feststellen des vom Objekt auf der Abtastlinie reflektierten Lichts,
▪ eine Luftzufuhrquelle und
▪ Einrichtungen zum Feststellen der Ausgänge der genannten FestkörperBildaüfnahmeelemente zum Beurteilen jedes einzelnen der Gruppe von Festkörper-Bildaufnahmeelementen, ob das Objekt auf der Abtastlinie ein Fremdartikel oder einer aus der Vielzahl der anderen Körper ist.

Besagte Vorrichtung kennzeichnet sich durch
▪ eine Vielzahl von Düsenelementen, die in einer Reihe parallel zur Abtastlinie angeordnet sind derart, daß jedes Düsenelement mit einem Satz von "n" Festkörper-Bildaufnahmeelementen der genannten optischen Abtasteinrichtung korrespondiert, wobei "n" eine positive ganze Zahl ist,
▪ eine Vielzahl von Ventilen, die in einer eins zu eins Relation bezüglich der Düsenelemente angeordnet sind und individuell steuerbar sind, um Luft von der Luftversorgungsquelle durchzulassen, und
▪ Ventilsteuereinrichtungen zur Steuerung der Ventile derart, daß, wenn ein Objekt als undurchsichtiger Fremdartikel von einem bestimmten Element der Mehrzahl der Festkörper-Bildaufnahmeelemente durch die Beurteilungseinrichtung erkannt worden ist, aus einem der Düsenelemente, die dem bestimmten Satz entspricht und benachbarten Düsen auf der gegenüberliegenden Seite dieses einen Düsenelementes ein Luftstrahl ausgeblasen wird, um das Objekt wegzublasen.

Neben Systemen, bei denen das zu sortierende Material von Röntgenstrahlen durchleuchtet und anschießend nach der Beschaffenheit der austretenden Strahlung als Sortierkriterium sortiert wird, sind solche bekannt, die die Intensität und spektrale Zusammensetzung von sichtbarem Licht als so genannte Farbsortierung nutzen.

So werden gemäß EP 0 737 112 B1/DE 694 30 386 T2 mittels
- einer Fördereinrichtung mit einem einheitlich kontrastierenden Hintergrund für die zu fördernden und zu sortierenden Partikel und einer darüber angebrachten gesteuerten Beleuchtung,
- eines Positionssensors zur Bestimmung der Position der Partikel mit einer Logik zum Unterteilen einer Betrachtungsfläche in eine Matrix von Zellen mit einer Anzahl von Pixeln mit einem ersten Kontroller,
- eines Bilddetektors zum Erfassen eines Farbbildes,
- eines Bildprozessors zum Empfangen von Daten der Betrachtungsfläche und
- einer von einem zweiten Kontroller aktivierten Trenneinrichtung Schrottpartikel auf der Basis von Unterscheidungssignalen aus deren Farbe sortiert.

Diesem System liegt der bewährte technologische Ablauf von sensorgestützten Sortiertechniken, wie Datenerfassung - Datenberechnung - Sortierentscheidung - Ansteuerung einer Fördereinrichtung zu Grunde. Diese

Lösung ist nur zur Sortierung von Schrotten geeignet, wenn als Sortierkriterium die Farbe gilt. Überdeckt eine Schicht aus Schmutz oder Werkstoffen die als Sortierkriterium verwendbare Materialfarbe, so sind diese Systeme nicht anwendbar.

In der Quelle "http://www.besttoratec.com/sorter/Helius_laser-sorter.htm" wurde schon ein Linienlaser als Beleuchtung, jedoch nicht für eine 3D-Erkennung, sondern als Emitter für eine Farbkamera beschrieben.

Darüber hinaus ist aus der Quelle "http://www.sick.fi/ch/products/machinevision/ruler/de.toolboxpar.0008.file.tmp/ Produktinformation_Ruler.pdf" auf Seite 3 die Nutzung einer Laserbreite als "Laserstreulicht" zu Sortierungszwecken bekannt.

Danach sollen in Klassifizierungsapplikationen in der Holzindustrie sowohl Form- als auch Oberflächeneigenschaften von Objekten ausgewertet werden. Neben dem Messen der Objektkontur kann gleichzeitig ein Graustufenbild und ein Bild mit den Oberflächeninformationen erzeugt werden (Laserstreulicht- oder Tracheideffekt genannt). Im Beispiel der Schnittholzklassifizierung wird die geometrisch von vornherein bestimmbare Form des Schnittholzes vermessen, wobei lediglich Fehler wie Astlöcher und Harzgallen erkannt werden können. Mit dieser Information werden die Schnitthölzer dann nach besagten Qualitäts-Merkmalen - nicht nach unbestimmbaren Formen - sortiert.

Bei solchen Anwendungen werden die Schnitthölzer zwar einer Hochgeschwindigkeitsmessurig unterzogen, jedoch nicht nach dem Sortierkriterium der Erkennung von unbestimmbar auftretenden Formen des Sortierobjekts.

Des Weiteren ist aus der US 2010 0 290 032 A1 für die Sortierung von Plastik, Stoff, Nahrungsmittel, Papier, Glass, Metall bekannt, mittels eines drehenden Spiegelrades einen gelenkten Laser im Infrarotspektrum zu verwenden, der jedoch nicht dauerhaft an allen Positionen eine Messung durchführen kann, weil dem dortigen Punktsensor
die Informationen sequentiell durch den Spiegel zugeleitet werden. Diese Lösung gestattet nur die Erkennung nach einer spektralen Zusammensetzung.

Ein Ausblick auf die US 6 914 678 B1 offenbart zur automatischen Erkennung und Sortierung von besonders Plastikarten in Abfällen Lampen, die IR- oder sichtbares Licht aussenden. Ein Spiegel, der das IR- oder sichtbare Licht umlenkt und eine Kamera als Erkennungseinheit werden verwendet. Es können zwar mehrere Wellenlängen gleichzeitig erkannt werden, jedoch ist nur die Zusammensetzung eines Nicht-IR Spektrums oder des sichtbaren Spektrums des reflektierten Lichts möglich, und es werden nur spektrale Unterschiede erkannt.

Auf einem anderen Gebiet, so der Erkennung von Unterschieden im Gewebe von lebenden Organismen wie Menschen oder Tiere, werden gemäß WO 2006/038 876 A1 nicht sichtbare Laser wie "monolithische Laser" mit schnell wechselnder Wellenlänge als System zur Erzeugung von O (optical) C(coherence) T (thomography) Bildern nach der Methode der Interferometrie eingesetzt. Dieses System dient zur Erkennung von Abständen durch Modulation der Wellenlänge. Es ist auch in der Materialinspektion zur Detektion von Rissen oder Ungleichmäßigkeiten in der Materie anwendbar. Durch einen modulierbaren Punktlaser mit Umlenkspiegeln kann nicht die Oberfläche erkannt werden, sondern nur der innere Aufbau.

### Darstellung der Erfindung

Die Auswertung diese Standes Technik lehrt zur Erkennung von Objekten, dass einerseits als Sortierkriterium die Farbe von Oberflächen verwendet und andererseits der innere Aufbau eines Objektes detektiert wird. Überdeckt eine Schicht aus Schmutz oder Werkstoffen die als Sortierkriterium verwendbare Materialfarbe, so sind diese Systeme nicht anwendbar.

Davon abweichend liegt der Erfindung die Aufgabe zu Grunde, unter grundsätzlicher Beibehaltung des technologischen Ablaufs von sensorgestützten Sortiertechniken, ein Verfahren und eine Einrichtung zu schaffen, die zur Einzelkornsortierung von Objekten aus Schüttgütern, insbesondere gebrochene mineralische Erze, zerkleinerte und unzerkleinerte Kunststoffe aus Abfällen, zerkleinertes Holz, aber auch umfassend sowohl metallische als auch mineralische Bestandteile, effizient anwendbar sind und ein mehrdimensionales Sortierkriterium, wie die Höhenverteilung eines Sortierobjekts und die Ausbreitung einer Lichtquelle auf der von vornherein unbestimmbaren, polygonalen Oberfläche eines Sortierobjekts nutzt und bekannte Kameras eingesetzt werden.

Erfindungsgemäß nutzt das Verfahren zur Erkennung von Materialunterschieden das Merkmal der Lichtausbreitung in der Materialoberfläche der zu sortierenden Objekte derart, daß hierzu das Licht einer Lichtquelle quer zur Förderrichtung auf einer Ebene einer Fördereinrichtung wie Förderband oder Rutsche projiziert wird, die auf dieser Ebene liegenden und zu sortierenden Objekte unter dem Licht hindurch bewegt werden, ein Teil des Lichts von der Oberfläche der Objekte reflektiert, ein anderer Teil entsprechend der topologischen Beschaffenheit der Oberfläche der Objekte in die oberen polygonalen Materialgeometrien eintritt, gestreut wird und neben einer Eintrittsstelle wieder austritt und eine solche reflektierte Ausbreitung in einer definierbaren Breite sichtbar erfasst wird. Hierbei wird die physikalische Erkenntnis genutzt, daß lichtdurchlässige Objekte eine breite Reflektion und lichtundurchlässige eine schmale aufweisen.

Somit konzentriert sich der erfindungsgemäße Kern des Verfahrens auf die Schritte, dass
- als Sortierkriterium die Höhenverteilung der auf einer Fördereinrichtung mit ersten Mitteln zur Bildung von Signalen aus sensorgestützten Aufnahmen zur Ansteuerung einer Austragseinheit zu sortierenden Objekte und die Ausbreitung eines zeitlich konstant leuchtenden Lichtbandes einer Lichtquelle zur Erzeugung des kontinuierlich leuchtenden Lichtbandes auf einer im Voraus unbestimmbaren polygonalen Oberfläche des einzelnen Objekts verwendet werden,
- das Lichtband auf einer Ebene projiziert wird und dabei ein erster Teil des erzeugten Lichts von den Oberflächen der Objekte reflektiert wird und ein zweiter Teil entsprechend der topologischen oder polygonalen Beschaffenheit der Oberfläche des einzelnen Objekts in die jeweilige obere polygonale Materialgeometrie an einer Eintrittsstelle eintritt, dann gestreut wird und an einer Austrittstelle wieder austritt, wobei das Licht einen Weg unter der Materialoberfläche zurücklegt,
- durch zweite Mittel zur Erfassung einer reflektierten Ausbreitung in einer definierbaren Breite des Lichtbandes eine solche reflektierte und gestreute Ausbreitung in einem Raster mit einer Schrittweite pro Segment entlang des Lichtbandes optisch und orts- und zeitbezogen als digitale Signale von mehreren sequentiell aufgenommenen Zeilen nach dem Prinzip einer Lasertriangulation oder Polygonierung erfasst, aufgelöst und an einer Höhe einer Messstelle ermittelt wird,
- die erfasste/erfassbare Ausbreitung des Lichtbandes aufgenommen und durch dritte Mittel angezeigt wird und in den gepufferten Zeilen zusammenhängende Bereiche für Messwerte als zu dem jeweiligen realen Objekt zugehöriges Objektbild und die Grenzen der realen Objekte identifiziert werden,
- die Daten aller Messwerte eines Objektbilds des realen Objektes zu Merkmalswerten der Objektbilder geführt werden und in Abhängigkeit von voreingestellten Sortierparametern für die Merkmalswerte eine Austragseinheit der Fördereinrichtung angesteuert wird, wobei
- vierte Mittel zur Identifizierung zusammenhängender Bereiche anhand einstellbarer Schwellen für Messwerte der Objekte als Signale für Sortierparameter, mittels derer die Austragseinheit der ersten Mittel ansteuerbar ist, verwendet werden.

Dieses Verfahren wird durch die die dritten Mittel gepuffert in einem Bild angezeigte Ausbreitung des Lichtbandes ausgebildet, wobei die Grenzen der realen Objekte im gepufferten Bild identifiziert werden.

Die in ersten Mitteln aus sensorgestützten Aufnahmen gebildeten Signale können in den zweiten Mitteln gebildet und in den dritten Mitteln, in dem Bild und in den vierten Mitteln verarbeitet werden.

Die Breite des Lichtbandes wird von einer Kamera nach dem Prinzip der angewendeten und erfindungsgemäß so genutzten Lasertriangulation mit einer dimensionierten Frequenz örtlich aufgelöst erfasst.

Diese Lasertriangulation bedeutet, daß Festpunkte auf den nicht von vornherein in der Form bestimmbaren Körnern des Schüttgutes nach dem Prinzip der Trigonometrie hinsichtlich der Position in einem Bezugsystem bestimmt und vermessen werden, und zwar über die Dimensionen von Breiten und Längen einzelner quasi trigonometrischer Punkte und ihrer quasi Azimute.

Die Kamera nimmt die erfasste Laserbreite zeilenweise und zeitbezogen über eine Schnittstelle in Form eines Kamerabildes auf. Dieses wird mittels einer Software in einem Rechenwerk ausgewertet.

Die Software steuert abhängig vorr den eingestellten Sortierparametern eine Austragseinheit wie besagte Fördereinrichtung an, die den Strom eines Schüttgutes in mindestens zwei Fraktionen trennt.

Das Verfahren definiert als Sortierkriterium also örtlich aufgelöst eine Breite der Laserlinie und zusätzlich eine Höhe einer Messstelle, an der die Breite der Laserlinie ermittelt wurde.

Diese Kombination ermöglicht überraschend, insbesondere bei Schüttgütern mit mineralischen Bestandteilen eine Einzelkornsortierung von z.B. Schüttgütern mit Bestanteilen aus Quarz und Feldspat.

Andererseits ist das Verfahren auch für Schüttgüter mit Bestandteilen von Schrotten, wie glänzende Metalle, die eine schmalere Reflektion als Kunststoffe erzeugen, anwendbar.

Der erfindungsgemäße Vorteil zur eingangs mit den analysierten Nachteilen der z.B.Farbsortierung ist, dass die eindringtiefenabhänge Lichtdurchlässigkeit der Oberfläche eines zu sortierenden Objekts als Sortierkriterium genutzt werden kann. Dabei wird auch die von vornherein unbestimmbare topologische Beschaffenheit der Oberflächen der Objekte bestimmbar gemacht.

Damit können dann z.B. unterschiedliche aufgebaute Minerale, wie beispielsweise Quarze zu Feldspat oder unterschiedlich geformte Schrottstücke aufgrund ihrer Form getrennt werden.

Dies schließt somit das Merkmal der "Produktvergangenheit" als Sortierkriterium ein, dass mit Farbe allein in vielen Fällen nicht sortiert werden kann, wie z.B. Airbagkartuschen von im Shredder beanspruchten Metallschrotten zu unterscheiden, da beide gleichfarbig sind, mit ein. Dabei weisen die Airbagkartuschen aufgrund der Funktionsweise im Kraftfahrzeug eine immer gleiche bis ähnliche Form auf, die sich von den anderen Schrottstücken unterscheidet, und die bei der Beanspruchung im Shredder nicht maßgeblich verändert wird.

Der zusätzliche Vorteil der hier erfindungsgemäß angewendeten Lasertriangulation ist, dass das Sortiergut von einem Förderband sensorisch eindeutig abgegrenzt werden kann, da es in jedem Fall über das Förderband nach oben hinausragt. Hingegen muss bei der z.B. Farberkennung eine Unterscheidbarkeit von Förderbandfarbe und Objektfarbe geschaffen werden. Dies ist nicht immer ohne zusätzlichen Aufwand realisierbar, da meistens das Förderband sich der Farbe des Stoffstroms anpasst.

Gegenüber den bekannten Verfahren und Einrichtungen hebt sich die Erfindung dadurch ab, dass sie mittels eines aus der neuen Kombination des so genannten Lichthofeffekts und der Höhentriangulation sich verschmelzenden Effektes mehr als nur spektrale Unterschiede von zu trennenden Objekten für eine effizientere Sortierung zur Erkennung bringt.

Weiter ausgebaut kennzeichnet sich der Verfahrensablauf mit dem Sortierkriterium einer Höhenverteilung der zu sortierenden Objekte auf der Fördereinrichtung und der Ausbreitung eines Lichtbandes einer Lichtquelle auf einer im Voraus unbestimmbaren polygonalen Oberfläche des einzelnen Objekts und Mitteln zur Ansteuerung der Austragseinheit durch die konkreten Schritte, dass
a) das zeitlich konstant leuchtende Lichtband der Lichtquelle quer zu der Förderrichtung des Schüttgutes auf der Ebene der Fördereinrichtung projiziert wird,
b) die auf dieser Ebene liegenden und zu sortierenden realen Objekte unter dem Lichtband hindurch bewegt werden,
c) dabei der erste Teil des vom Lichtband erzeugten Lichts von den Oberflächen der Objekte reflektiert wird und der zweite Teil entsprechend der topologischen oder polygonalen Beschaffenheit der Oberfläche des einzelnen Objekts in die jeweilige obere polygonale Materialgeometrie an der Eintrittsstelle eintritt, dann gestreut wird und an der Austrittstelle wieder austritt, wobei das Licht einen Weg unter der Materialoberfläche zurücklegt,
d) eine solche reflektierte und gestreute Ausbreitung in dem Raster mit einer Schrittweite optisch erfasst und orts- und zeitbezogen als digitale Signale von mehreren sequentiell aufgenommenen Zeilen gepuffert wird, wobei die Ausbreitung des Lichtbandes von der Kamera nach dem Prinzip der Lasertriangulation oder Polygonierung bei einer Frequenz von mindestens 100HZ erfasst, mit maximal 10mm/Pixel, vorzugsweise von 0,1 und 10 mm/Pixel, aufgelöst und an einer Höhe einer Messstelle ermittelt und die erfasste/erfassbare Ausbreitung des Lichtbandes mindestens zeilenweise und mindestens zeitbezogen aufgenommen und gepuffert in dem Bild angezeigt wird,
e) in diesen gepufferte Zeilen zusammenhängende Bereiche anhand einstellbarer Schwellen für Messwerte als zu dem realen Objekt zugehöriges Objektbild identifiziert werden, indem die Grenzen der realen Objekte durch Bildverarbeitungsmethoden im gepufferten Bild identifiziert werden,
f) die Daten aller Messwerte des Objektbilds zusammenhängend einer statistischen Auswertung unterzogen und zu Merkmalswerten der Objektbilder und damit auch der realen Objekte geführt werden und
g) in Abhängigkeit von voreingestellten Sortierparametern für die Merkmalswerte die Austragseinheit der Fördereinrichtung angesteuert wird, die das Schüttgut in mindestens zwei Fraktionen von realen Objekten des Schüttgutes trennt.

Das Verfahren wird zweckmäßig angewendet und ausgebaut, wenn
- ein Linienlaser als Lichtquelle und eine Laserlinie als Lichtband verwendet werden,
- die Schrittweite 0,1 bis 10mm pro Segment entlang des Lichtbandes betragen kann,
- die Auflösung des Lichtbandes in einem Bereich von 0,1 bis 10 mm/Pixel erfolgt,
- das zugehörige Objektbild durch Bildverarbeitungsmethoden im gepufferten Bild identifiziert wird und/oder
- ein Flächensensor für die nach dem Prinzip der Lasertriangulation arbeitende Kamera verwendet wird.

Zur zweckmäßigen Realisierung des Verfahrens wird ein Programm als Software für eine das Verfahren steuernde Rechnereinheit eingesetzt, das mindestens eine der Funktionen, wie
- optische Erfassung der Ausbreitung des von den Oberflächen der Objekte reflektierten oder gestreuten Lichts in einem Raster mit einer bestimmten Schrittweite entlang des Lichtbandes,
- orts- und zeitbezogene Pufferung in mehreren sequentiell aufgenommenen Zeilen als digitale Signale,
- Identifizierung von zusammenhängenden Bereichen in diesen gepufferten Zeilen und Auswertung anhand einstellbarer Schwellen für Messwerte als Objektbilder und Ansteuerung der Austragseinheit zur Trennung der Objekte in Fraktionen
aufweist.

In diesen Funktionen werden Daten oder Merkmale zur Verwendung der Lichtquelle wie Linienlaser mit Lichtband des Linienlasers, Schrittweiten und Zeilen, Höhen einer Messstelle sowie eine zeitbezogene Aufnahme, Pufferung und Anzeige in einem Bild dimensioniert oder digitalisiert integriert, und zwar zur Sicherstellung der sich aus den Ansprüchen 1 bis 7 ergebenden Verfahrensanforderungen und den beteiligten Einrichtungsmerkmalen.

Dementsprechend wird eine Einrichtung zur Durchführung des Verfahrens eingesetzt, welche umfasst
a) eine·Fördereinrichtung mit ersten Mitteln zur sensorgestützten Aufnahme von Signalen zur Ansteuerung der Austragseinheit mit den ersten Mitteln,
b) eine Lichtquelle zur Erzeugung eines Lichtbandes zur Bildbelichtung,
c) zweite Mittel zur Erfassung der reflektierten Ausbreitung in einer definierbaren Breite des Lichtbandes,
d) dritte Mittel zur Pufferung orts- und zeitbezogener, digitaler Signale von mehreren sequentiell aufgenommenen Zeilen und Anzeige in einem Bild,
e) vierte Mittel zur Identifizierung zusammenhängender Bereiche anhand einstellbarer Schwellen für Messwerte der Objekte als Signale für Sortierparameter, mittels derer die ersten Mittel ansteuerbar sind, wobei
f) die ersten bis vierten Mittel je mindestens eines der nachstehenden Elemente aufweisen:
   - einen Sensor,
   - eine Baueinheit für das Raster,
   - eine Rechnereinheit zur Aufnahme von Werten, Verarbeitung/Auswertung der Werte in Daten und Ausgabe von Signalen und zur Anwendung des Programms und/oder
   - die Kamera.

Dafür ist die Lichtquelle zur Strahlformung für das kontinuierlich leuchtende Lichtband als Linienlaser mit unbewegtem optischen Element ausgeführt.

Die Erfindung wird an Hand der Zeichnungen als Ausführungsbeispiel erläutert.

### Kurze Beschreibung der Zeichnungen

In den Zeichnungen zeigen
Fig. 1 die Darstellung des Verfahrens in einem Schema des Wirkprinzips mit den wesentlichen Merkmalen und
Fig. 2 eine Einrichtung zur Durchführung des Verfahrens in schematischer Darstellung.

### Bester Weg zur Ausführung der Erfindung

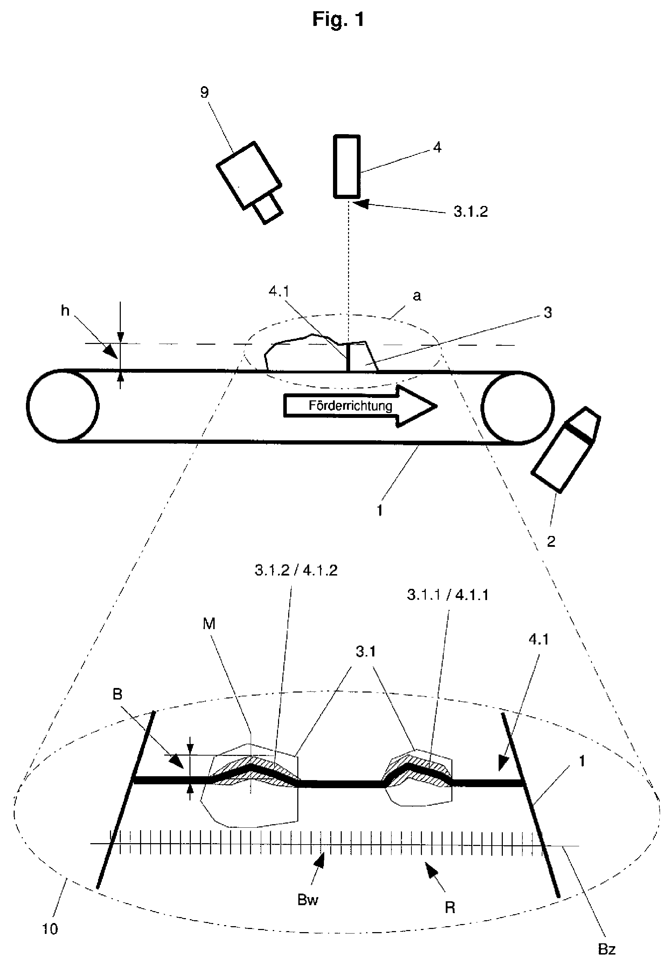

Gemäß Fig.1 ist dargestellt, wie ein Lichtband 4.1 als Laserlinie einer als Linienlaser verwendeten Lichtquelle 4 quer zu einer mit einem Pfeil angegebenen Förderrichtung eines Laserstrahlung nicht komplett absorbierende Objekte enthaltenden Schüttgutes 3 auf einer Ebene der Fördereinrichtung 1 projiziert wird. Währenddessen werden die auf dieser Ebene liegenden und zu sortierenden Objekte 3.1 unter dem Lichtband 4.1 hindurch bewegt.

Dabei wird ein erster Teil 4.1.1 des vom Lichtband 4.1 erzeugten Lichts von einer der Oberflächen der Objekte 3.1 reflektiert. Ein zweiter Teil 4.1.2 tritt entsprechend der hier nicht erkennbaren topologischen oder polygonalen Beschaffenheit der Oberfläche des einzelnen Objekts 3.1 in die jeweilige obere polygonale Materialgeometrie an einer Eintrittstelle 3.1.1 ein und wird dann gestreut, um an einer Austrittstelle 3.1.2 wieder auszutreten. Das heißt, dass das Licht einen Weg unter der Materialoberfläche zurücklegt, und zwar so, wie es der Stand der Technik gerade nicht lehrt.

Diese derart reflektierte und gestreute Ausbreitung B des Lichtbandes wird in an einer Höhe h einer Messstelle M ermittelt. Des weiteren wird in einem Raster R mit einer bestimmten Schrittweite B_{w}, die vorzugsweise 0,1 bis 10mm pro Segment beträgt, entlang des Lichtbandes 4.1 optisch von einer Kamera 9 nach dem Prinzip einer Lasertriangulation oder Polygonierung bei einer Frequenz von mindestens 100HZ diese Ausbreitung B erfasst, mit maximal 10mm/Pixel, vorzugsweise von 0,1 und 10 mm/Pixel aufgelöst und orts- und zeitbezogen als digitale Signale von mehreren sequentiell aufgenommenen Zeilen B_{z} gepuffert und in einem Bild 10 gezeigt.

In diesen gepufferten Zeilen B_{z} werden zusammenhängende Bereiche anhand einstellbarer Schwellen für Messwerte als Objekte 3.1 identifiziert. Sodann werden die Daten aller Messwerte eines Objekts 3.1 zusammenhängend einer statistischen Auswertung unterzogen und zu Merkmalswerten der Objekte 3.1 geführt. Dabei wird ein zu dem realen Objekt 3.1 zugehöriges Objektbild identifiziert, indem die Grenzen der realen Objekte 3.1 durch Bildverarbeitungsmethoden im gepufferten Bild 10 identifiziert werden.

In Abhängigkeit von voreingestellten Sortierparametern für die Merkmalswerte wird eine Austragseinheit 2 der Fördereinrichtung 1 angesteuert, die das Schüttgut 3 in mindestens zwei Fraktionen, wie verwertbares Produkt und Störstoff von Objekten 3.1 des Schüttgutes 3 trennt.

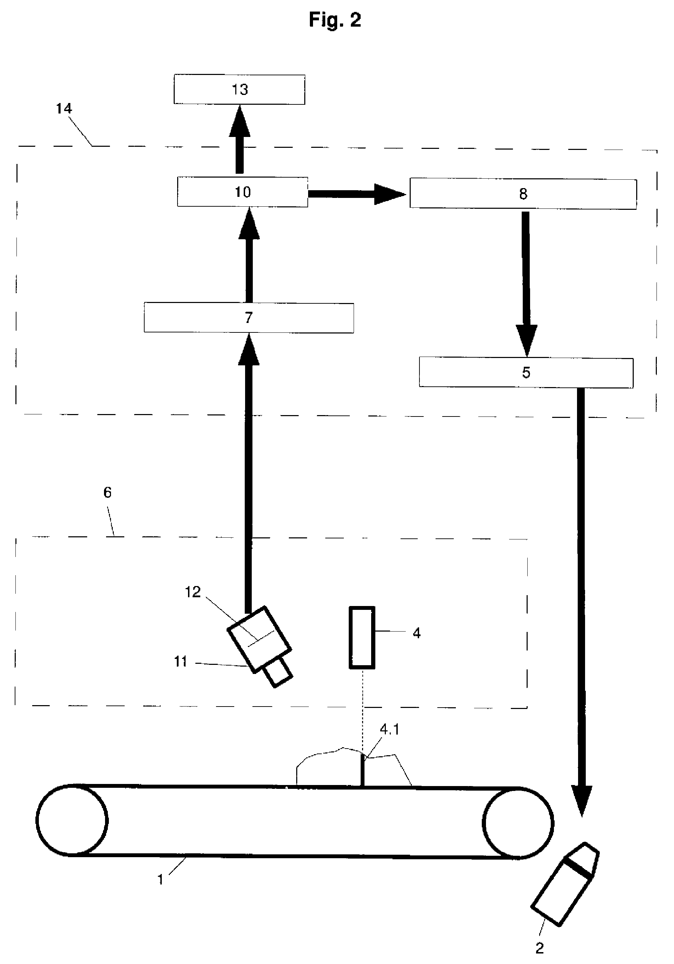

Die Einrichtung umfasst gemäß Fig. 2 eine Fördereinrichtung 1 mit ersten Mitteln 5 zur sensorgestützten Ansteuerung einer Austragseinheit 2. Die Lichtquelle 4 wie Linienlaser erzeugt das Lichtband 4.1 als Laserlinie. Zweite Mittel 6 erfassen die reflektierte und gestreute Ausbreitung B (Fig. 1) in einer definierbaren Breite des Lichtbandes 4.1 und dritte Mittel 7 puffern orts- und zeitbezogene digitale Signale von mehreren sequentiell aufgenommenen Zeilen in dem Bild 10. Vierte Mittel 8 dienen der Identifizierung zusammenhängender Bereiche anhand einstellbarer Schwellen für Messwerte der Objekte 3.1 als Signale für Sortierparameter, mittels derer die ersten Mittel 5 ansteuerbar sind.

Zur Ausführung können die ersten bis vierten Mittel 5, 6, 7, 8 je mindestes eines der nachstehenden Elemente, wie Sensoren 11, eine Baueinheit 12 für das Raster R, ein Display 13 zum Anzeigen des Bildes 10 und eine Rechnereinheit 14 zur Verwendung des Programms aufweisen.

Aus der Gegenüberstellung
- des eingangs ausgewerteten Standes der Technik, so auch den sich aus der US 2010 0 290 032 A1 und der US 6 914 678 B1 ergebenden nachteiligen Wirkungen,
- zu der daraus herausgearbeiteten neuen Aufgabenstellung der Erfindung und der offenbarten Erfindung sowie dem vorstehenden Ausführungsbeispiel
wird überraschend erkennbar, dass durch die Erfindung
- während der Belichtung ein kontinuierlich leuchtender Laserstrich im sichtbaren Spektrum mit konstanter Wellenlänge erzeugt wird,
- mittels einer nach dem Prinzip einer Lasertriangulation arbeitenden Kamera, also einem 2D-Bildsensor, die Ausbreitung der gesamten Laserlinie quasi zeitgleich erfasst wird, wozu Helligkeitsunterschiede im Kamerabild verwendet werden und
- eine geometrische Ablenkung des Laserlichts auf der Oberfläche und unterhalb der Oberfläche nach dem Wiederaustritt erfolgt, so dass
- als sich abhebender Gesamteffekt eine zeilenweise Höhenerkennung und Erkennung der Laserbreite als so genannter Lichthofeffekt genutzt wird, um die Objekte im Materialstrom des Schüttgutes zu unterscheiden und gleichzeitig einen Höhenunterscheid zwischen Förderband und Objekten herauszufinden.

Somit unterscheidet sich die Erfindung vorteilhaft vom Stand der Technik, der zur Erkennung von Objekten im Wesentlichen lehrt, dass als Sortierkriterium einerseits die Farbe von Oberflächen verwendet und andererseits der innere Aufbau eines Objektes detektiert.

### Gewerbliche Anwendbarkeit

Da die Erfindung für die sensorgestützte Einzelkornsortierung von im Voraus unbestimmbarer Oberflächen auch beliebiger Schüttgüter über die Festlegung von Lagepunkten auf den Körnern mittels elektronischer Polygonierung eine wirtschaftlich vorteilhafte Lösung anbietet, ist eine breite gewerbliche Anwendung und industrieelle Nutzung gewährleistet.

### Bezugszeichenliste

- 1: = Fördereinrichtung
- 2: = Austragseinheit
- 3: = Schüttgut
- 3.1: = reales Objekt des Schüttgutes 3
- 3.1.1: = Eintrittsstelle
- 3.1.2: = Austrittstelle
- 4: = Lichtquelle, Linienlaser
- 4.1: = Lichtband, Laserlinie
- 4.1.1: = erster, reflektierter Teil des Lichts
- 4.1.2: = zweiter, gestreuter Teil des Lichts
- 5: = erste Mittel zur Ansteuerung der Austragseinheit 2
- 6: = zweite Mittel
- 7: = dritte Mittel
- 8: = vierte Mittel
- 9: = Kamera
- 10: = Bild
- 11: = Sensor
- 12: = Baueinheit für das Raster R
- 13: = Display
- 14: = Rechnereinheit

- B: = reflektierte und gestreute Ausbreitung
- B_{w}: = reflektierte und gestreute Schrittweite
- B_{z}: = aufgenommene und gepufferte Zeile
- H: = Höhe der Messstelle M
- M: = Messstelle
- R: = Raster

## Patentansprüche

1. Verfahren zur Einzelkornsortierung von Objekten (3.1) aus Schüttgütern (3), wobei
- als Sortierkriterium die Höhenverteilung der auf einer Fördereinrichtung (1) zu sortierenden Objekte (3.1) und die Ausbreitung eines zeitlich konstant leuchtenden Lichtbandes (4.1) auf einer im Voraus unbestimmbaren polygonalen Oberfläche des einzelnen Objekts (3.1) verwendet werden,
- das Lichtband (4.1) auf einer Ebene projiziert wird und dabei ein erster Teil (4.1.1) des erzeugten Lichts von den Oberflächen der Objekte (3.1) reflektiert wird und ein zweiter Teil (4.1.2) entsprechend der topologischen oder polygonalen Beschaffenheit der Oberfläche des einzelnen Objekts (3.1) in die jeweilige obere polygonale Materialgeometrie an einer Eintrittsstelle (3.1.1) eintritt, dann gestreut wird und an einer Austrittstelle (3.1.2) wieder austritt, wobei das Licht einen Weg unter der Materialoberfläche zurücklegt,
- eine solche reflektierte und gestreute Ausbreitung (B) in einem Raster (R) mit einer Schrittweite (B_{w}) pro Segment entlang des Lichtbandes (4.1) optisch und orts- und zeitbezogen als digitale Signale von mehreren sequentiell aufgenommenen Zeilen (B_{z}) nach dem Prinzip einer Lasertriangulation oder Polygonierung erfasst, aufgelöst und an einer Höhe (h) einer Messstelle (M) ermittelt wird,
- die erfasste/erfassbare Ausbreitung (B) des Lichtbandes (4.1) aufgenommen und gepuffert in einem Bild (10) angezeigt wird und in den gepufferten Zeilen (B_{z}) zusammenhängende Bereiche für Messwerte als zu dem jeweiligen realen Objekt (3.1) zugehöriges Objektbild identifiziert und die Grenzen der realen Objekte im gepufferten Bild (10) identifiziert werden,
- die Daten aller Messwerte eines Objektbilds des realen Objektes (3.1) zu Merkmalswerten der Objektbilder geführt werden und in Abhängigkeit von voreingestellten Sortierparametern für die Merkmalswerte eine Austragseinheit (2) der Fördereinrichtung (1) angesteuert wird.

2. Verfahren nach Anspruch 1, bei dem zur Einzelkornsortierung der Objekte (3.1) aus insbesondere gebrochene mineralische Erze, zerkleinerte und unzerkleinerte Kunststoffe aus Abfällen, zerkleinertes Holz auf einer Fördereinrichtung (1) umfassende Schüttgüter, die folgenden Schritte ausgeführt werden:
a) Das zeitlich konstant leuchtende Lichtband (4.1) der Lichtquelle (4) wird quer zu einer Förderrichtung (1) des Schüttgutes (3) auf der Ebene der Fördereinrichtung (1) projiziert,
b) die auf dieser Ebene liegenden und zu sortierenden Objekte (3.1) werden unter dem Lichtband (4.1) hindurch bewegt,
c) der erster Teil (4.1.1) des vom Lichtband (4.1) erzeugten Lichts wird von den Oberflächen der Objekte (3.1) reflektiert, und der zweite Teil (4.1.2) tritt entsprechend der topologischen oder polygonalen Beschaffenheit der Oberfläche des einzelnen Objekts (3.1) in die jeweilige obere polygonale Materialgeometrie an einer Eintrittsstelle (3.1.1) ein, wird gestreut und tritt an einer Austrittstelle (3.1.2) wieder aus,
d) die reflektierte und gestreute Ausbreitung (B) wird in dem Raster (R) mit einer Schrittweite (B_{w}) pro Segment entlang des Lichtbandes (4.1) mittels einer Kamera (9) optisch erfasst und orts- und zeitbezogen als digitale Signale von mehreren sequentiell aufgenommenen Zeilen (B_{z}) gepuffert, wobei die Ausbreitung (B) des Lichtbandes (4.1) von der Kamera (9) nach dem Prinzip der Lasertriangulation oder Polygonierung bei einer Frequenz von mindestens 100HZ erfasst, mit maximal 10mm/Pixel aufgelöst und an der Höhe (h) der Messstelle (M) ermittelt und die erfasste/erfassbare Ausbreitung (B) des Lichtbandes (4.1) mindestens zeilenweise und mindestens zeitbezogen aufgenommen und gepuffert in einem Bild (10) angezeigt wird,
e) in diesen gepufferten Zeilen (B_{z}) die zusammenhängenden Bereiche anhand einstellbarer Schwellen für Messwerte als zu dem jeweiligen realen Objekt (3.1) zugehöriges Objektbild (3.1.4) identifiziert werden, indem die Grenzen der realen Objekte im gepufferten Bild (10) identifiziert werden,
f) die Daten aller Messwerte des Objektbilds des realen Objektes (3.1) zusammenhängend einer statistischen Auswertung unterzogen und zu Merkmalswerten der Objektbilder und damit auch der Objekte (3.1) geführt werden und
g) in Abhängigkeit der voreingestellten Sortierparameter die Austragseinheit (2) der Fördereinrichtung (1) angesteuert wird, die das Schüttgut (3) in mindestens zwei Fraktionen von Objekten (3.1) des Schüttgutes (3) trennt.

3. Verfahren nach Anspruch 1 oder 2, **gekennzeichnet durch** die Verwendung eines Linienlasers als Lichtquelle (4) und einer Laserlinie als Lichtband (4.1).

4. Verfahren nach einem der Ansprüche 1 bis 3, **gekennzeichnet durch** eine Schrittweite (B_{w}) von 0,1 bis 10mm pro Segment entlang des Lichtbandes (4.1).

5. Verfahren nach einem der Ansprüche 1 bis 4, **gekennzeichnet durch** die Auflösung des Lichtbandes (4.1) im Bereich von 0,1 bis 10 mm/Pixel.

6. Verfahren nach einem der Ansprüche 1 bis 5, **dadurch gekennzeichnet, dass** das zugehörige Objektbild durch Bildverarbeitungsmethoden im gepufferten Bild (10) identifiziert wird.

7. Verfahren nach einem der Ansprüche 1 bis 6, **gekennzeichnet durch** die Verwendung eines Flächensensors für die nach dem Prinzip der Lasertriangulation arbeitende Kamera (9).

8. Verfahren nach einem der Ansprüche 1 bis 7, **gekennzeichnet durch** die Verwendung eines Programms als Software für eine das Verfahren steuernde Rechnereinheit (14), aufweisend mindestens eine der Funktionen
- optische Erfassung der Ausbreitung des von den Oberflächen der Objekte (3.1) reflektierten oder gestreuten Lichts in einem Raster mit einer bestimmten Schrittweite entlang des Lichtbandes (4.1)
- orts- und zeitbezogene Pufferung in mehreren sequentiell aufgenommenen Zeilen als digitale Signale,
- Identifizierung von zusammenhängenden Bereichen in diesen gepufferten Zeilen (B_{z}) und Auswertung anhand einstellbarer Schwellen für Messwerte als Objektbilder und Ansteuerung der Austragseinheit (2) zur Trennung der Objekte (3:1) in Fraktionen,
in welchen Funktionen, Daten oder Merkmale zur Verwendung der Lichtquelle (4) wie Linienlaser mit Lichtband (4.1) des Linienlasers, Schrittweiten (B_{w}) und Zeilen (B_{z}), Höhen (h) einer Messstelle (M) sowie zeitbezogene Aufnahme, Pufferung und Anzeige in einem Bild (10) dimensioniert oder digitalisiert integriert werden.

9. Einrichtung zur Durchführung des Verfahrens nach den Ansprüchen 1 bis 8, welche umfasst
a) eine Fördereinrichtung (1) mit ersten Mitteln (5) zur sensorgestützten Aufnahme von Signalen zur Ansteuerung der Austragseinheit (2),
b) eine Lichtquelle zur Erzeugung eines Lichtbandes (4.1) zur Bildbelichtung,
c) zweite Mittel (6) zur Erfassung der reflektierten Ausbreitung in einer definierbaren Breite (B) des Lichtbandes (4.1)
d) dritte Mittel (7) zur Pufferung orts- und zeitbezogener, digitaler Signale von mehreren sequentiell aufgenommenen Zeilen (B_{z}) und Anzeige in einem Bild (10),
e) vierte Mittel (8) zur Identifizierung zusammenhängender Bereiche anhand einstellbarer Schwellen für Messwerte der Objekte (3) als Signale für Sortierparameter, mittels derer die ersten Mittel (5) ansteuerbar sind, wobei
f) die ersten bis vierten Mittel (5, 6, 7, 8) je mindestens eines der nachstehenden Elemente aufweisen:
- Einen Sensor (11),
- eine Baueinheit (12) für das Raster (R),
- eine Rechnereinheit (14) zur Aufnahme von Werten, Verarbeitung/Auswertung der Werte in Daten und Ausgabe von Signalen und zur Anwendung des Programms,
- die Kamera (9).

10. Einrichtung nach Anspruch 9, wobei die Lichtquelle (4) zur Strahlformung für das kontinuierlich leuchtende Lichtband (4.1) als Linienlaser mit unbewegtem optischen Element ausgeführt ist.

## Claims

1. A method for individual grain sorting of objects (3.1) from bulk materials (3), wherein
- height distribution of the plurality of objects (3.1) on a conveying device (1) and propagation of a light band (4.1) illuminating in a temporally constant manner a polygonal surface of the individual object (3.1) that cannot be identified in advance are used as sorting criteria,
- the light band (4.1) is projected on a plane wherein a first part (4.1.1) of the generated light is reflected by the surfaces of the objects (3.1) and a second part (4.1.2), depending on the topological or polygonal nature of the surface of the individual object (3.1), enters the respective upper polygonal material geometry at an entry point (3.1.1), is then scattered and emerges again at an exit point (3.1.2), the light travelling along a path under the surface of the material,
- such reflected and scattered propagation (B) is optically detected and resolved in a grid (R) having step width (B_{w}) per segment along the light band (4.1) in a location- and time-referenced manner as digital signals from a plurality of sequentially recorded rows (B_{z}) according to the principle of laser triangulation or polygonization, and is determined at a height (h) of a measuring point (M),
- the detected/detectable propagation (B) of the light band (4.1) is recorded and displayed as a buffered image (10), and contiguous regions in the buffered rows (B_{z}) for measured values are identified as an object image associated with the respective real object (3.1), and the boundaries of the real objects are identified in the buffered image (10),
- the data of all measured values of an object image of each of the real object (3.1) are converted to feature values of the object images and, depending on pre-set sorting parameters for the feature values, a discharge unit (2) of the conveying device (1) is activated.

2. A method according to claim 1, wherein for individual grain sorting of the objects (3.1) in particular of broken mineral ores, fragmented and unfragmented plastics from waste materials, bulk materials comprising fragmented wood on a conveying device (1), the following steps are performed:
a) the temporally constantly illuminated light band (4.1) of the light source (4) is projected at right angles to a conveying direction (1) of the bulk material (3) on the plane of the conveying device (1),
b) the objects (3.1) to be sorted and lying on that plane are moved along below the light band (4.1),
c) the first part (4.1.1) of the light generated by the light band (4.1) is reflected by the surfaces of the objects (3.1), and the second part (4.1.2), depending on the topological or polygonal nature of the surface of the individual object (3.1), enters the respective upper polygonal material geometry at an entry point (3.1.1), is scattered and emerges again at an exit point (3.1.2),
d) the reflected and scattered propagation (B) is optically detected in the grid (R) with a step width (B_{w}) per segment along the light band (4.1) by means of a camera (9) and is buffered in a location- and time-referenced manner as digital signals from a plurality of sequentially recorded rows (B_{z}), wherein the propagation (B) of the light band (4.1) is detected by the camera (9) according to the principle of laser triangulation or polygonization at a frequency of at least 100 Hz, resolved with a maximum value of 10 mm/pixel and determined at the height (h) of the measuring point (M), and the detected/detectable propagation (B) of the light band (4.1) is recorded at least row-by-row and at least in a time-referenced manner and is displayed in a buffered form in an image (10),
e) in said buffered rows (B_{z}), the contiguous regions are identified on the basis of adjustable thresholds for measured values as an object image (3.1.4) associated with the real object (3.1), by identifying the boundaries of the real objects in the buffered image (10),
f) the data from all measured values of the object image of the real object (3.1) are contiguously subjected to a statistical analysis and converted into feature values of the object images and thus also of the objects (3.1), and
g) depending on the pre-set sorting parameters, the discharge unit (2) of the conveying device (1) is activated, which separates the bulk material (3) into at least two fractions of objects (3.1) of the bulk material (3).

3. A method according to claim 1 or 2, **characterized in that** a line laser is used as light source (4) and a laser line is used as light band (4.1).

4. A method according to any of the claims 1 to 3, **characterized in that** the step width (B_{w}) is 0.1 to 10 mm per segment along the light band (4.1).

5. A method according to any of the claims 1 to 4, **characterized in that** the resolution of the light band (4.1) is within the range of 0.1 to 10 mm/pixel.

6. A method according to any of the claims 1 to 5, **characterized in that** the corresponding object image is identified in the buffered image (10) by image processing methods.

7. A method according to any of the claims 1 to 6, **characterized in that** a surface sensor is used for the camera (9) working according to the principle of laser triangulation.

8. A method according to any of the claims 1 to 7, **characterized in that** a program is used as software for a computer unit (14) controlling the method which provides at least one of the functions of
- optical detection of the propagation of the light reflected or scattered by the surfaces of the objects (3.1) in a grid with a specific step width along the light band (4.1),
- location and time-referenced buffering in a plurality of sequentially recorded rows as digital signals,
- identification of contiguous regions in the buffered rows (B_{z}) and analysis based on adjustable thresholds for measured values as object images, and control of the discharge unit (2) for separating the objects (3.1) into fractions,
in which functions, data or features for using the light source (4) such as a line laser with light band (4.1) of the line laser, step width (B_{w}) and rows (B_{z}), heights (h) of a measuring point (M) and time-referenced recording, buffering and display in an image (10) are integrated in a dimensioned or digitized form.

9. A device for carrying out the method according to claims 1 to 8, comprising
a) a conveying device (1) with first means for a sensor-based recording of signals for activating the discharge unit (2),
b) a light source (4) for generating a light band (4.1) for image exposure,
c) second means (6) for detecting the reflected propagation in a definable width (B) of the light band (4.1),
d) third means (7) for buffering location- and time-referenced digital signals from a plurality of sequentially recorded rows (B_{z}) and display in an image (10),
e) fourth means (8) for identifying contiguous regions on the basis of adjustable thresholds for measured values of the objects (3) as signals for sorting parameters by means of which the first means (5) can be controlled, wherein
f) the first to fourth means (5, 6, 7, 8) have at least one of the following element each:
- a sensor (11),
- a module (12) for the grid (R),
- a computer unit (14) for the recording of values, the processing/analysis of the values into data and output of signals, and for application of the program,
- the camera (9).

10. A device according to claim 9, wherein the light source (4) for beam shaping for the continuously illuminated light band (4.1) is designed as a line laser with a steady optical element.

## Revendications

1. Procédé pour le tri granulométrique d'objets (3.1) à partir de matières en vrac (3), dans lequel
- on utilise, en guise de critère de tri, la répartition en hauteur des objets (3.1) à trier sur un dispositif de transport (1) et la propagation d'une bande lumineuse (4.1) brillant de manière constante dans le temps sur une surface polygonale ne pouvant pas être définie à l'avance de l'objet (3.1) individuel,
- la bande lumineuse (4.1) étant projetée sur un plan et ce faisant, une première partie (4.1.1) de la lumière produite étant réfléchie par les surfaces de l'objet (3.1) et une deuxième partie (4.1.2) entrant conformément à la nature topologique ou polygonale de la surface de l'objet individuel (3.1) dans la géométrie de matériau polygonale supérieure respective à un point d'entrée (3.1.1), étant ensuite diffusée et ressortant de nouveau à un point de sortie (3.1.2), dans lequel la lumière parcoure un trajet sous la surface du matériau,
- une telle propagation (B) réfléchie et diffusée étant détectée dans un quadrillage (R) avec un pas (B_{w}) par segment le long de la bande lumineuse (4.1) de façon optique et en fonction de l'emplacement et du temps en tant que signaux numériques de plusieurs lignes (B_{z}) enregistrées séquentiellement selon le principe d'une triangulation laser ou polygonation, étant résolue et déterminée au niveau d'une hauteur (h) d'un point de mesure (M),
- la propagation (B) détectée/détectable de la bande lumineuse (4.1) étant enregistrée et affichée de manière mise en mémoire tampon dans une image (10), et dans les lignes (B_{z}) mises en mémoire tampon, des zones en relation pour des valeurs de mesure étant identifiées en tant qu'image d'objet appartenant à l'objet réel (3.1) respectif et les limites des objets réels étant identifiées dans l'image mise en mémoire tampon (10),
- les données de toutes les valeurs de mesure d'une image d'objet de l'objet réel (3.1) étant gérées en tant que valeurs caractéristiques des images d'objet et en fonction de paramètres de tri préréglés pour les valeurs caractéristiques, une unité de déversement (2) du dispositif de transport (1) étant commandée.

2. Procédé selon la revendication 1, dans lequel, pour le tri granulométrique des objets (3.1) à partir de matières en vrac comprenant en particulier des minerais minéraux broyés, des matières synthétiques de déchets réduites et non réduites, du bois réduit en morceaux sur un dispositif de transport (1), on exécute les étapes suivantes :
a) la bande lumineuse (4.1) brillant de manière constante dans le temps de la source lumineuse (4) est projetée transversalement à une direction de transport (1) de la matière en vrac (3) sur le plan du dispositif de transport (1),
b) les objets (3.1) situés sur ce plan et à trier sont déplacés en passant sous la bande lumineuse (4.1),
c) la première partie (4,1,1) de la lumière produite par la bande lumineuse (4.1) est réfléchie par les surfaces des objets (3.1), et la deuxième partie (4.1.2) entre, conformément à la nature topologique ou polygonale de la surface de l'objet (3.1) individuel, dans la géométrie de matériau polygonale supérieure respective à un point d'entrée (3.1.1), est diffusée et ressort de nouveau à un point de sortie (3.1.2),
d) la propagation (B) réfléchie et diffusée est détectée optiquement dans le quadrillage (R) avec un pas (B_{w}) par segment le long de la bande lumineuse (4.1) au moyen d'une caméra (9) et est mise en mémoire tampon en fonction de l'emplacement et du temps en tant que signaux numériques de plusieurs lignes (B_{z}) enregistrées séquentiellement, dans lequel la propagation (B) de la bande lumineuse (4.1) est détectée par la caméra (9) selon le principe de la triangulation laser ou de la polygonation avec une fréquence d'au moins 100HZ, est résolue avec 10mm/pixel au maximum et est déterminée au niveau de la hauteur (h) du point de mesure (M), et la propagation (B) détectée/détectable de la bande lumineuse (4.1) étant enregistrée au moins par lignes et au moins en fonction du temps et affichée de manière mise en mémoire tampon dans une image (10),
e) dans ces lignes mises en mémoire tampon (B_{z}), les zones en relation étant identifiées à l'aide de seuils réglables pour des valeurs de mesure en tant qu'image d'objet (3.1.4) faisant partie de l'objet réel (3.1) respectif en ce que les limites de l'objet réel sont identifiées dans l'image mise en mémoire tampon (10),
f) les données de toutes les valeurs de mesure de l'image d'objet de l'objet réel (3.1) étant soumises, en étant en relation, à une évaluation statique et étant gérées en tant que valeurs caractéristiques des images d'objet, et donc également des objets (3.1), et
g) en fonction des paramètres de tri préréglés, l'unité de déversement (2) du dispositif de transport (1) étant commandée, laquelle unité sépare la matière en vrac (3) en au moins deux fractions d'objets (3.1) de la matière en vrac (3).

3. Procédé selon la revendication 1 ou 2, **caractérisé par** l'utilisation d'un laser à ligne en tant que source lumineuse (4) et d'une ligne laser en tant que bande lumineuse (4.1).

4. Procédé selon l'une des revendications 1 à 3, **caractérisé par** un pas (B_{w}) de 0,1 à 10 mm par segment le long de la bande lumineuse (4.1).

5. Procédé selon l'une des revendications 1 à 4, **caractérisé par** la résolution de la bande lumineuse (4.1) dans la plage de 0,1 à 10 mm/pixel.

6. Procédé selon l'une des revendications 1 à 5, **caractérisé en ce que** l'image d'objet associée est identifiée grâce à des méthodes de traitement d'image dans l'image (10) mise en mémoire tampon.

7. Procédé selon l'une des revendications 1 à 6, **caractérisé par** l'utilisation d'un capteur plat pour la caméra (9) travaillant selon le principe de la triangulation laser.

8. Procédé selon l'une des revendications 1 à 7, **caractérisé par** l'utilisation d'un programme en tant que logiciel pour une unité de calcul (14) commandant le procédé, présentant au moins l'une des fonctions suivantes :
- la détection optique de la propagation de la lumière réfléchie ou diffusée par les surfaces des objets (3.1) dans un quadrillage avec un pas déterminé le long de la bande lumineuse (4.1),
- la mise en mémoire tampon en fonction de l'emplacement et du temps dans plusieurs linges enregistrées séquentiellement en tant que signaux numériques,
- l'identification de zones en relation dans ces lignes (B_{z}) mises en mémoire tampon et l'évaluation à l'aide de seuils réglables pour des valeurs de mesure en tant qu'images d'objet et la commande de l'unité de déversement (2) pour la séparation des objets (3.1) en fractions,
dans lesquelles fonctions, des données ou caractéristiques pour l'utilisation de la source lumineuse (4) telle un laser à ligne avec bande lumineuse (4.1) du laser à ligne, des pas (B_{w}) et des lignes (B_{z}), des hauteurs (h) d'un point de mesure (M) ainsi que l'enregistrement en fonction du temps, la mise en mémoire tampon et l'affichage dans une image (10) sont intégrées de manière dimensionnée ou numérisée.

9. Dispositif pour la mise en oeuvre du procédé selon les revendications 1 à 8, comprenant :
a) un dispositif de transport (1) avec des premiers moyens (5) pour l'enregistrement, à l'aide de capteurs, de signaux pour la commande de l'unité de déversement (2),
b) une source lumineuse pour la production d'une bande lumineuse (4.1) pour l'éclairage de l'image,
c) des deuxièmes moyens (6) pour la détection de la propagation réfléchie dans une largeur (B) pouvant être définie de la bande lumineuse (4.1),
d) des troisièmes moyens (7) pour la mise en mémoire tampon en fonction de l'emplacement et du temps de signaux numériques de plusieurs lignes (B_{z}) enregistrées séquentiellement et l'affichage dans une image (10),
e) des quatrièmes moyens (8) pour l'identification de zones en relation à l'aide de seuils réglables pour des valeurs de mesure des objets (3) en tant que signaux pour des paramètres de tri au moyen desquels les premiers moyens peuvent être commandés, dans lequel
f) les premier à quatrième moyens (5, 6, 7, 8) présentent respectivement au moins l'un des éléments suivants :
- un capteur (11),
- un élément constitutif (12) pour le quadrillage (R),
- une unité de calcul (14) pour l'enregistrement de valeurs, le traitement/l'évaluation des valeurs en données et la sortie de signaux et pour l'utilisation du programme,
- la caméra (9).

10. Dispositif selon la revendication 9, dans lequel la source lumineuse (4) pour la formation de rayonnement pour la bande lumineuse (4.1) brillant de manière continue en tant que laser à ligne est réalisée en tant que laser à ligne avec un élément optique non déplacé.
